(19) Europäisches Patentamt
European Patent Office
Office européen des brevets

(11) **EP 4 596 239 A1**

(12) **EUROPEAN PATENT APPLICATION**
published in accordance with Art. 153(4) EPC

(43) Date of publication:
**06.08.2025   Bulletin 2025/32**

(21) Application number: **23872308.4**

(22) Date of filing: **26.09.2023**

(51) International Patent Classification (IPC):
***B32B 27/32*** *(2006.01)*      ***B65D 65/40*** *(2006.01)*

(52) Cooperative Patent Classification (CPC):
**B32B 27/32; B65D 65/40**

(86) International application number:
**PCT/JP2023/034851**

(87) International publication number:
**WO 2024/071085 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022   JP 2022157678
30.09.2022   JP 2022157993
30.09.2022   JP 2022157996**

(71) Applicant: **RM TOHCELLO CO., LTD.
Tokyo 101-8485 (JP)**

(72) Inventors:
• **SAKURAI, Masayuki**
**Koga-shi, Ibaraki 306-0213 (JP)**
• **HASHIZUME, Kazuki**
**Koga-shi, Ibaraki 306-0213 (JP)**
• **TAMURA, Takuya**
**Koga-shi, Ibaraki 306-0213 (JP)**
• **KATSURAGAWA, Izumi**
**Koga-shi, Ibaraki 306-0213 (JP)**
• **WAKAKI, Hiroyuki**
**Hamamatsu-shi, Shizuoka 434-0002 (JP)**

(74) Representative: **Hoffmann Eitle
Patent- und Rechtsanwälte PartmbB
Arabellastraße 30
81925 München (DE)**

(54) **STRETCHED POLYETHYLENE FILM, PACKAGING MATERIAL, AND FOOD PACKAGED BODY**

(57)   A stretched polyethylene film includes a high density polyethylene layer 1 (101), a medium density polyethylene layer (102), and a high density polyethylene layer 2 (103) in this order, and when a first differential scanning calorimetry (1st Run) including a process of raising the temperature from -50°C to 200°C at a temperature rising rate of 10°C/min, an isothermal process of holding the temperature at 200°C for 10 minutes, and a process of lowering the temperature from 200°C to -50°C at a temperature falling rate of 10°C/min, and a second differential scanning calorimetry (2nd Run) including a process of raising the temperature from -50°C to 200°C at a temperature rising rate of 10°C/min are continuously performed using a differential scanning calorimeter, in a DSC curve 1 obtained by the first differential scanning calorimetry, an endothermic peak A is observed in a range of equal to or higher than 10°C and equal to or lower than 160°C, and an amount of heat of fusion ($\Delta H_m$) of the endothermic peak A is equal to or more than 110 J/g and equal to or less than 162 J/g.

[Fig.1]

EP 4 596 239 A1

**Description**

TECHNICAL FIELD

The present invention relates to a stretched polyethylene film, a packaging material, and a food packaged body.

BACKGROUND ART

In the field of the packaging film, various attempts to devise materials to be used, a layer configuration, or the like to improve various performances are known.

Patent Document 1 discloses a laminated film including a base material layer and a heat seal layer, in which a stiffness strength measured under conditions of a loop length of 50 mm and a pushing-in length of 10 mm is equal to or more than 70 mN in a TD direction, and a content of polyethylene is equal to or more than 90% by mass, and this laminated film can be recycled and can sufficiently ensure the self-standing properties of a standing pouch.

Patent Document 2 discloses a polyethylene laminate for a packaging material, including at least a stretched polyethylene film, an adhesive layer, and a heat sealable polyethylene layer, in which the adhesive layer includes a non-solvent type adhesive, and the stretched polyethylene film includes at least one of high density polyethylene (HDPE) or medium density polyethylene (MDPE), and describes that the polyethylene laminate for a packaging material can significantly reduce the burden on the environment and has high printing suitability and strength.

Patent Document 3 discloses a polyethylene co-extrusion film including a polyethylene film base material, and a polyethylene film layer, in which the polyethylene film base material is an electron beam irradiation layer containing polyethylene, a light stabilizer, and a crosslinking agent, the polyethylene film layer contains polyethylene, and a surface opposite to a surface on which the polyethylene film base material is provided has heat sealability, and describes that this polyethylene co-extrusion film can suppress deterioration over time and the heat resistance and the strength are further improved.

Patent Document 4 discloses a multilayer film in which a gas barrier layer formed by applying a dispersion liquid containing an inorganic layered compound and a water-soluble polymer onto at least one surface of a base material layer composed of a thermoplastic resin, an overcoat layer containing a cationic resin and a resin having a hydroxyl group, an adhesive layer, and a sealant layer are sequentially laminated, and describes that this multilayer film has excellent heat sealability and gas barrier properties.

RELATED DOCUMENT

PATENT DOCUMENT

Patent Document 1: Japanese Unexamined Patent Publication No. 2022-053864
Patent Document 2: Japanese Unexamined Patent Publication No. 2022-079510
Patent Document 3: Japanese Unexamined Patent Publication No. 2018-008455
Patent Document 4: Japanese Unexamined Patent Publication No. 2009-241359

SUMMARY OF THE INVENTION

TECHNICAL PROBLEM

Recently, environmental awareness has risen, in particular, problems such as marine plastic pollution have attracted attention. Therefore, packaging films have come under scrutiny from society. The recycling of packaging films has been further required as compared to the past. In other words, packaging films are required to be designed and manufactured in consideration of "easy recycling".

In most of the packaging films, desired effects (for example, strength or gas barrier properties) are obtained by laminating various kinds of materials. For example, the multilayer film described in Patent Document 4 includes at least four layers including the gas barrier layer, the overcoat layer, the adhesive layer, and the sealant layer. However, the lamination of various kinds of materials leads to difficult recycling.

From the viewpoint of easily recycling packaging films, for example, it is considered to adopt a very simple layer configuration.

From the viewpoint of simplifying the layer configuration, it is actively considered to form a packaging film with a single layer. In addition, there are examples as those disclosed in Patent Documents 1 to 3, which consider ease of recycling as a multilayer structure in which one type of material is blended at a high content as a whole, although the films are not formed with a single layer.

The present inventors conducted a preliminary investigation on properties required for packaging films using a polyethylene film that is a versatile packaging material having a relatively low cost. As a result of the investigation, it was found that the polyethylene "single layer" film has poor flexibility.

The present invention provides a stretched polyethylene film having improved flexibility and a packaging material formed of the stretched polyethylene film.

SOLUTION TO PROBLEM

[1] A stretched polyethylene film including, in order:

a high density polyethylene layer 1;
a medium density polyethylene layer; and
a high density polyethylene layer 2,
in which when a first differential scanning calorimetry (1st Run) including a process of raising temperature from -50°C to 200°C at a temperature rising rate of 10°C/min, an isothermal process of holding the temperature at 200°C for 10 minutes, and a process of lowering the temperature from 200°C to -50°C at a temperature falling rate of 10°C/min, and a second differential scanning calorimetry (2nd Run) including a process of raising the temperature from -50°C to 200°C at a temperature rising rate of 10°C/min are continuously performed using a differential scanning calorimeter,
in a DSC curve 1 obtained by the first differential scanning calorimetry, an endothermic peak A is observed in a range of equal to or higher than 10°C and equal to or lower than 160°C, and an amount of heat of fusion ($\Delta H_m$) of the endothermic peak A is equal to or more than 110 J/g and equal to or less than 162 J/g.

[2] The stretched polyethylene film according to [1],
in which a density of the medium density polyethylene layer, which is measured in accordance with JIS K 7112: 1999, is equal to or more than 910 kg/m$^3$ and equal to or less than 935 kg/m$^3$.
[3] The stretched polyethylene film according to [1] or [2],
in which an amorphous thickness obtained from a peak in a diffraction angle 2θ range of 0.2° to 0.4° in an MD direction by small angle X-ray scattering (SAXS) measurement is less than 12.5 nm.
[4] The stretched polyethylene film according to any one of [1] to [3],
in which when an entirety of the stretched polyethylene film is 100% by mass, a total amount of the high density polyethylene layer 1 and the high density polyethylene layer 2 in the stretched polyethylene film is equal to or more than 25% by mass and equal to or less than 85% by mass.
[5] The stretched polyethylene film according to any one of [1] to [4],
in which a density of each of the high density polyethylene layer 1 and the high density polyethylene layer 2, which is measured in accordance with JIS K 7112: 1999, is equal to or more than 940 kg/m$^3$ and equal to or less than 970 kg/m$^3$.
[6] The stretched polyethylene film according to any one of [1] to [5],
in which an MFR of each of the high density polyethylene layer 1 and the high density polyethylene layer 2, which is measured under conditions of 190°C and a load of 2.16 kg in accordance with ASTM D1238, is equal to or more than 0.01 g/10 min and equal to or less than 20 g/10 min.
[7] The stretched polyethylene film according to any one of [1] to [6],
in which an MFR of the medium density polyethylene layer, which is measured under conditions of 190°C and a load of 2.16 kg in accordance with ASTM D1238, is equal to or more than 0.01 g/10 min and equal to or less than 20 g/10 min.
[8] The stretched polyethylene film according to any one of [1] to [7],
in which in the stretched polyethylene film, a full width at half maximum (FWHM) of a peak in a diffraction angle 2θ range of 0.2° to 0.4° in an MD direction, which is obtained from small angle X-ray scattering (SAXS) measurement, is equal to or less than 0.21°.
[9] The stretched polyethylene film according to any one of [1] to [8],
in which in the stretched polyethylene film, a Haze per one stretched polyethylene film, which is measured in accordance with JIS K 7136: 2000, is equal to or less than 16.0%.
[10] The stretched polyethylene film according to any one of [1] to [9],
in which a tensile modulus $T_2$ of the stretched polyethylene film in a TD direction, which is measured using a tensile tester under conditions of a measurement temperature of 23 ± 2°C, a relative humidity of 50 ± 5% RH, and a tensile speed of 5 mm/min in accordance with JIS K7127: 1999, is equal to or more than 700 MPa.

[11] The stretched polyethylene film according to any one of [1] to [10],

in which a total value of a tensile modulus $T_1$ in an MD direction and a tensile modulus $T_2$ in a TD direction of the stretched polyethylene film, which is measured using a tensile tester under conditions of a measurement temperature of $23 \pm 2°C$, a relative humidity of $50 \pm 5\%$ RH, and a tensile speed of 5 mm/min in accordance with JIS K7127: 1999, is equal to or more than 1500 MPa and equal to or less than 2900 MPa.

[12] The stretched polyethylene film according to any one of [1] to [11],

in which a thermal shrinkage rate of the stretched polyethylene film in an MD direction when subjected to a heat treatment at 100°C for 15 minutes in accordance with JIS C2151: 2019 is equal to or less than 6.0%.

[13] The stretched polyethylene film according to any one of [1] to [12],

in which a thermal shrinkage rate of the stretched polyethylene film in an MD direction when subjected to a heat treatment at 120°C for 15 minutes in accordance with JIS C2151: 2019 is equal to or less than 25.0%.

[14] The stretched polyethylene film according to any one of [1] to [13],

in which at least one surface of the stretched polyethylene film is a corona-treated surface.

[15] The stretched polyethylene film according to any one of [1] to [14],

in which a lamination strength of the stretched polyethylene film in an MD direction, which is measured using a tensile tester under conditions of T-type peeling and a crosshead speed of 300 mm/min in accordance with JIS Z 0238: 1998, is equal to or more than 0.7 N/15 mm and equal to or less than 10.0 N/15 mm.

[16] The stretched polyethylene film according to any one of [1] to [15],

in which the number of pinholes generated in the stretched polyethylene film, which is measured by a bending test of 3000 times at a bending angle of 440 degrees and a bending speed of 40 times/min in an atmosphere of -30°C using a Gelbo Flex Tester, is equal to or less than 2500 pinholes/m$^2$.

[17] The stretched polyethylene film according to any one of [1] to [16],

in which a tear strength of the stretched polyethylene film in an MD direction, which is measured using a light load tearing tester under conditions of a test piece having a size of 63.5 mm in the MD direction and 50.0 mm in a TD direction, a pendulum weight of 96.09 g, a tear length of 12.7 mm, and a pendulum lifting angle of 90°, is equal to or more than 100 mN and equal to or less than 600 mN.

[18] The stretched polyethylene film according to any one of [1] to [17],

in which a thickness of an entire stretched polyethylene film is equal to or more than 10 $\mu$m and equal to or less than 100 $\mu$m.

[19] The stretched polyethylene film according to any one of [1] to [18],

in which the stretched polyethylene film is a packaging film for food.

[20] A packaging material using the stretched polyethylene film according to any one of [1] to [19].

[21] A food packaged body including:

the packaging material according to [20]; and
food inside the packaging material.

ADVANTAGEOUS EFFECTS OF INVENTION

According to the present invention, it is possible to provide a stretched polyethylene film having improved flexibility.

BRIEF DESCRIPTION OF THE DRAWINGS

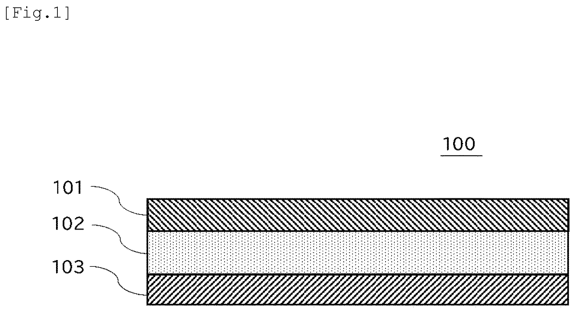

[FIG. 1] A cross-sectional view schematically showing an example of a structure of a stretched polyethylene film according to an embodiment of the present invention.

DESCRIPTION OF EMBODIMENTS

Hereinafter, an embodiment of the present invention will be described using the drawings. In the present specification, unless otherwise specified, "A to B" indicating a numerical range means equal to or more than A and equal to or less than B.

<Stretched Polyethylene Film>

A stretched polyethylene film (100) according to the present embodiment includes a high density polyethylene layer 1 (101), a medium density polyethylene layer (102), and a high density polyethylene layer 2 (103) in this order, and when a first differential scanning calorimetry (1st Run) including a process of raising the temperature from -50°C to 200°C at a temperature rising rate of 10°C/min, an isothermal process of holding the temperature at 200°C for 10 minutes, and a process of lowering the temperature from 200°C to -50°C at a temperature falling rate of 10°C/min, and a second differential scanning calorimetry (2nd Run) including a process of raising the temperature from -50°C to 200°C at a temperature rising rate of 10°C/min are continuously performed using a differential scanning calorimeter, in a DSC curve 1 obtained by the first differential scanning calorimetry, an endothermic peak A is observed in a range of equal to or higher than 10°C and equal to or lower than 160°C, and an amount of heat of fusion ($\Delta H_m$) of the endothermic peak A is equal to or more than 110 J/g and equal to or less than 162 J/g.

According to the investigation of the present inventor, it was found that, by adopting a three-layer structure including the high density polyethylene layer 1, the medium density polyethylene layer, and the high density polyethylene layer 2 in this order, and setting the amount of heat of fusion ($\Delta H_m$) of the endothermic peak A observed in a range of equal to or higher than 10°C and equal to or lower than 160°C in the DSC curve obtained by the differential scanning calorimetry of the stretched polyethylene film to be in the above-described range, the flexibility can be improved.

In the present specification, the flexibility is represented by puncture resistance, bending resistance, and tear strength, and can be evaluated by a performance balance of puncture resistance, bend resistance, and tear strength. In addition, in the present specification, the flexibility means that the film is flexible and is not easily torn or broken.

In the stretched polyethylene film of the present embodiment, from the viewpoint of further suppressing the thickness unevenness of the stretched polyethylene film, the amount of heat of fusion ($\Delta H_m$) of the endothermic peak A in the DSC curve obtained by the differential scanning calorimetry is equal to or more than 110 J/g, preferably equal to or more than 120 J/g, more preferably equal to or more than 130 J/g, still more preferably equal to or more than 140 J/g, even more preferably equal to or more than 145 J/g, and even still more preferably equal to or more than 150 J/g, and is equal to or less than 162 J/g and preferably equal to or less than 160 J/g.

The amount of heat of fusion of heat ($\Delta H_m$) of the endothermic peak A in the DSC curve obtained by the differential scanning calorimetry is measured as follows.

A test piece of about 5.0 mg is cut out from the stretched polyethylene film. Next, a first differential scanning calorimetry (1st Run) including a process of raising the temperature from -50°C to 200°C at a temperature rising rate of 10°C/min, an isothermal process of holding the temperature at 200°C for 10 minutes, and a process of lowering the temperature from 200°C to -50°C at a temperature falling rate of 10°C/min, and a second differential scanning calorimetry (2nd Run) including a process of raising the temperature from -50°C to 200°C at a temperature rising rate of 10°C/min are continuously performed on the test piece using a differential scanning calorimeter under a nitrogen gas flow.

In the DSC curve 1 obtained by the first differential scanning calorimetry, an amount of heat of fusion ($\Delta H_m$) (J/g) is obtained from an endothermic peak A observed in a range of equal to or higher than 10°C and equal to or lower than 160°C. Here, the amount of heat of the endothermic peak A is calculated by obtaining an area surrounded by a melting endothermic curve including the endothermic peak A and the baseline. The baseline is a line connecting a point at which a change in Deriv. Heat Flow starts (that is, a point at which a flat region of Deriv. Heat Flow ends) and a point at which the change in Deriv. Heat Flow ends (that is, a point at which Deriv. Heat Flow enters the flat region) after differentiating Heat Flow with respect to time before and after the endothermic peak A and displaying Deriv. Heat Flow.

In addition, in a case where a plurality of endothermic peaks are observed in a range of equal to or higher than 10°C and equal to or lower than 160°C, the maximum peak is defined as the endothermic peak A.

Hereinafter, the materials constituting the stretched polyethylene film will be described.

In the stretched polyethylene film according to the present embodiment, the density of the medium density polyethylene layer, which is measured in accordance with JIS K 7112: 1999, is preferably equal to or more than 910 kg/m³, more preferably equal to or more than 913 kg/m³, and still more preferably equal to or more than 915 kg/m³, and is preferably equal to or less than 935 kg/m³, more preferably equal to or less than 933 kg/m³, still more preferably equal to or less than 932 kg/m³, yet still more preferably equal to or less than 930 kg/m³, even more preferably equal to or less than 928 kg/m³, yet even more preferably equal to or less than 925 kg/m³, even still more preferably equal to or less than 922 kg/m³, and yet even still even more preferably equal to or less than 920 kg/m³, from the viewpoint of setting the amorphous thickness of the stretched polyethylene film to be equal to or less than a predetermined value and further improving the flexibility of the stretched polyethylene film. In addition, in the stretched polyethylene film according to the present embodiment, the density of the medium density polyethylene layer, which is measured in accordance with JIS K 7112: 1999, is preferably equal to or more than 917 kg/m³ and more preferably equal to or more than 918 kg/m³ from the viewpoint of further improving the performance balance of flexibility and thermal dimensional stability.

According to the stretched polyethylene film according to the present embodiment, by adopting a three-layer structure in which the medium density polyethylene layer is interposed between the high density polyethylene layer 1 and the high density polyethylene layer 2, and setting the density of the medium density polyethylene layer to be in the above-described range, the flexibility can be further improved.

The density of the medium density polyethylene constituting the medium density polyethylene layer, which is measured in accordance with JIS K 7112: 1999, is preferably equal to or more than 910 kg/m³, more preferably equal to or more than 913 kg/m³, and still more preferably equal to or more than 915 kg/m³, and is preferably equal to or less than 935 kg/m³, more preferably equal to or less than 933 kg/m³, still more preferably equal to or less than 932 kg/m³, yet still more preferably equal to or less than 930 kg/m³, even more preferably equal to or less than 928 kg/m³, yet even more preferably equal to or less than 925 kg/m³, even still more preferably equal to or less than 922 kg/m³, and yet even still more preferably equal to or less than 920 kg/m³, from the viewpoint of setting the amorphous thickness of the stretched polyethylene film to be equal to or less than a predetermined value and further improving the flexibility.

From the viewpoint of further improving the workability, the melt flow rate (MFR) of the medium density polyethylene layer, which is measured under the conditions of 190°C and a load of 2.16 kg in accordance with ASTM D1238, is preferably equal to or more than 0.01 g/10 min, more preferably equal to or more than 0.1 g/10 min, still more preferably equal to or more than 0.5 g/10 min, and even still more preferably equal to or more than 1.0 g/10 min. From the viewpoint of further improving the stiffness of the stretched polyethylene film while maintaining the tear resistance of the stretched polyethylene film, the melt flow rate (MFR) of the medium density polyethylene layer is preferably equal to or less than 20 g/10 min, more preferably equal to or less than 10 g/10 min, still more preferably equal to or less than 5 g/10 min, even more preferably equal to or less than 4 g/10 min, and even still more preferably equal to or less than 3 g/10 min.

From the viewpoint of further improving heat resistance and stiffness while maintaining workability and adhesiveness, the melting point of the medium density polyethylene layer, which is measured by a differential scanning calorimeter (DSC), is preferably equal to or higher than 110°C and more preferably equal to or higher than 115°C. From the viewpoint of further improving adhesiveness while maintaining heat resistance, the melting point of the medium density polyethylene layer is preferably equal to or lower than 135°C, more preferably equal to or lower than 130°C, still more preferably equal to or lower than 128°C, and even still more preferably equal to or lower than 125°C.

From the viewpoint of further improving workability, the melt flow rate (MFR) of the medium density polyethylene constituting the medium density polyethylene layer, which is measured under the conditions of 190°C and a load of 2.16 kg in accordance with ASTM D1238, is preferably equal to or more than 0.01 g/10 min, more preferably equal to or more than 0.1 g/10 min, still more preferably equal to or more than 0.5 g/10 min, and even still more preferably equal to or more than 1.0 g/10 min. From the viewpoint of further improving the stiffness of the stretched polyethylene film while maintaining the tear resistance of the stretched polyethylene film, the melt flow rate is preferably equal to or less than 20 g/10 min, more preferably equal to or less than 10 g/10 min, still more preferably equal to or less than 5 g/10 min, even more preferably equal to or less than 4 g/10 min, and even still more preferably equal to or less than 3 g/10 min.

From the viewpoint of further improving heat resistance and stiffness while maintaining workability and adhesiveness, the melting point of the medium density polyethylene constituting the medium density polyethylene layer, which is measured by a differential scanning calorimeter (DSC), is preferably equal to or higher than 110°C and more preferably equal to or higher than 115°C. From the viewpoint of further improving adhesiveness while maintaining heat resistance, the melting point of the medium density polyethylene layer is preferably equal to or lower than 135°C, more preferably equal to or lower than 130°C, still more preferably equal to or lower than 128°C, and even still more preferably equal to or lower than 125°C.

In a case where two or more types of polyethylene are used as polyethylene constituting the medium density polyethylene layer, the density, the MFR, and the melting point of the medium density polyethylene layer can be adopted as the measured values of a mixture obtained by melt-blending two or more types of polyethylene by a known method. As the melting point of the medium density polyethylene layer, a peak temperature of a maximum melting peak can be adopted.

From the viewpoint of setting the amorphous thickness of the stretched polyethylene film to be equal to or less than a predetermined value and further improving the flexibility, the content of the medium density polyethylene in the medium density polyethylene layer is preferably equal to or more than 80% by mass, more preferably equal to or more than 85% by mass, still more preferably equal to or more than 90% by mass, even more preferably equal to or more than 95% by mass, and even still more preferably equal to or more than 98% by mass with respect to the entire medium density polyethylene layer. The upper limit of the content of the medium density polyethylene in the medium density polyethylene layer is not limited, but is, for example, equal to or less than 100% by mass.

In the stretched polyethylene film according to the present embodiment, from the viewpoint of further improving the performance balance of transparency, rigidity, heat resistance, slip properties, heat fusion strength, and flexibility, the total amount of the high density polyethylene layer 1 and the high density polyethylene layer 2 is preferably equal to or more than 25% by mass, more preferably equal to or more than 30% by mass, still more preferably equal to or more than 35% by mass, even more preferably equal to or more than 40% by mass, and even still more preferably equal to or more than 45% by mass with respect to the entire stretched polyethylene film, and from the viewpoint of setting the amorphous thickness of the stretched polyethylene film to be equal to or less than a predetermined value and further improving the flexibility of the stretched polyethylene film, the total amount is preferably equal to or less than 85% by mass, more preferably equal to or less than 83% by mass, still more preferably equal to or less than 80% by mass, yet still more preferably equal to or less than 70% by mass, even more preferably equal to or less than 65% by mass, and even still more preferably equal to or less than 60% by mass.

In the stretched polyethylene film of the present embodiment, the high density polyethylene layer 1 and the high density polyethylene layer 2 may be formed of the same material or different materials. However, in a case where different materials are used, it is preferable to satisfy the following configurations of the high density polyethylene layer 1 and the high density polyethylene layer 2.

From the viewpoint of further improving the performance balance of transparency, rigidity, heat resistance, slip properties, and heat fusion strength, the content of the high density polyethylene in the high density polyethylene layer 1 and the high density polyethylene layer 2 is preferably equal to or more than 80% by mass, more preferably equal to or more than 85% by mass, still more preferably equal to or more than 90% by mass, even more preferably equal to or more than 95% by mass, and even still more preferably equal to or more than 98% by mass with respect to the entire high density polyethylene layer 1 and the entire high density polyethylene layer 2. The upper limit of the content of the high density polyethylene in the high density polyethylene layer 1 and the high density polyethylene layer 2 is not limited, but is, for example, equal to or less than 100% by mass.

From the viewpoint of further improving the balance of various performances such as heat resistance, transparency, mechanical properties, and rigidity, the density of each of the high density polyethylene layer 1 and the high density polyethylene layer 2, which is measured in accordance with JIS K 7112: 1999, is preferably equal to or more than 940 kg/m$^3$, more preferably equal to or more than 943 kg/m$^3$, and still more preferably equal to or more than 945 kg/m$^3$, and from the viewpoint of further improving the balance of flexibility and rigidity, the density is preferably equal to or less than 970 kg/m$^3$, more preferably equal to or less than 968 kg/m$^3$, still more preferably equal to or less than 965 kg/m$^3$, yet still more preferably equal to or less than 960 kg/m$^3$, even more preferably equal to or less than 955 kg/m$^3$, and even still more preferably equal to or less than 950 kg/m$^3$.

From the viewpoint of further improving the balance of various performances such as heat resistance, transparency, mechanical properties, and rigidity, the density of the high density polyethylene constituting each of the high density polyethylene layer 1 and the high density polyethylene layer 2, which is measured in accordance with JIS K 7112: 1999, is preferably equal to or more than 940 kg/m$^3$, more preferably equal to or more than 943 kg/m$^3$, and still more preferably equal to or more than 945 kg/m$^3$, and from the viewpoint of further improving the balance of flexibility and rigidity, the density is preferably equal to or less than 970 kg/m$^3$, more preferably equal to or less than 968 kg/m$^3$, still more preferably equal to or less than 965 kg/m$^3$, yet still more preferably equal to or less than 960 kg/m$^3$, even more preferably equal to or less than 955 kg/m$^3$, and even still more preferably equal to or less than 950 kg/m$^3$.

From the viewpoint of further improving fluidity and moldability, the melt flow rate (MFR) of each of the high density polyethylene layer 1 and the high density polyethylene layer 2, which is measured under the conditions of 190°C and a load of 2.16 kg in accordance with ASTM D1238, is preferably equal to or more than 0.01 g/10 min, more preferably equal to or more than 0.1 g/10 min, still more preferably equal to or more than 0.5 g/10 min, and even still more preferably equal to or more than 1.0 g/10 min, and from the viewpoint of further improving the stiffness of the stretched polyethylene film while maintaining the tear resistance of the stretched polyethylene film, the melt flow rate is preferably equal to or less than 20 g/10 min, more preferably equal to or less than 10 g/10 min, still more preferably equal to or less than 5 g/10 min, yet still more preferably equal to or less than 3 g/10 min, even more preferably equal to or less than 2 g/10 min, and even still more preferably equal to or less than 1.5 g/10 min.

From the viewpoint of further improving fluidity and moldability, the melt flow rate (MFR) of each of the high density polyethylene constituting the high density polyethylene layer 1 and the high density polyethylene layer 2, which is measured under the conditions of 190°C and a load of 2.16 kg in accordance with ASTM D1238, is preferably equal to or more than 0.01 g/10 min, more preferably equal to or more than 0.1 g/10 min, still more preferably equal to or more than 0.5 g/10 min, and even still more preferably equal to or more than 1.0 g/10 min, and from the viewpoint of further improving the stiffness of the stretched polyethylene film while maintaining the tear resistance of the stretched polyethylene film, the melt flow rate is preferably equal to or less than 20 g/10 min, more preferably equal to or less than 10 g/10 min, still more preferably equal to or less than 5 g/10 min, yet still more preferably equal to or less than 3 g/10 min, even more preferably equal to or less than 2 g/10 min, and even still more preferably equal to or less than 1.5 g/10 min.

From the viewpoint of further improving the balance of thermal dimensional stability, heat resistance, mechanical properties, rigidity, bag-making properties, fluidity, moldability, and the like, the melting point of each of the high density polyethylene layer 1 and the high density polyethylene layer 2, which is measured by a differential scanning calorimeter (DSC), is preferably equal to or higher than 120°C and more preferably equal to or higher than 125°C, and is preferably equal to or lower than 135°C, more preferably equal to or lower than 133°C, and still more preferably equal to or lower than 130°C.

From the viewpoint of further improving the balance of thermal dimensional stability, heat resistance, mechanical properties, rigidity, bag-making properties, fluidity, moldability, and the like, the melting point of the high density polyethylene constituting the high density polyethylene layer 1 and the high density polyethylene layer 2, which is measured by differential scanning calorimeter (DSC), is preferably equal to or higher than 120°C and more preferably equal to or higher than 125°C, and is preferably equal to or lower than 135°C, more preferably equal to or lower than 133°C, and still more preferably equal to or lower than 130°C.

In a case where two or more types of polyethylene are used as polyethylene constituting the high density polyethylene layer, the density, the MFR, and the melting point of the high density polyethylene layer can be adopted as the measured values of a mixture obtained by melt-blending two or more types of polyethylene by a known method. As the melting point of the high density polyethylene layer, a peak temperature of a maximum melting peak can be adopted.

It is preferable that at least one surface of the stretched polyethylene film of the present embodiment is a corona-treated surface (surface subjected to surface modification by corona discharge irradiation). By setting at least one surface of the stretched polyethylene film of the present embodiment to the corona-treated surface, the printing characteristics, the coating characteristics, the lamination characteristics with other films, and the like of the stretched polyethylene film of the present embodiment can be further improved.

The high density polyethylene layer 1, the high density polyethylene layer 2, and the medium density polyethylene layer may include various additives in the range that does not impair the object of the present invention. Examples of the additives include a heat resistance stabilizer, a weathering stabilizer, an antioxidant, an ultraviolet absorber, a lubricant, a slipping agent, a nucleating agent, an anti-blocking agent, an antistatic agent, an anti-fog agent, a pigment, a dye, and an inorganic or organic filler.

From the viewpoint of further improving the balance of the transparency, the rigidity, the heat resistance, the slip properties, and the heat fusion strength, the thickness of each of the high density polyethylene layer 1 and the high density polyethylene layer 2 is preferably equal to or more than 1 $\mu$m, more preferably equal to or more than 3 $\mu$m, and preferably equal to or less than 17 $\mu$m, more preferably equal to or less than 15 $\mu$m, still more preferably equal to or less than 10 $\mu$m, and even still more preferably equal to or less than 7 $\mu$m.

The thicknesses of the high density polyethylene layer 1 and the high density polyethylene layer 2 may be the same or different from each other, but are preferably the same from the viewpoint of making the mechanical strength of the stretched polyethylene film uniform on the high density polyethylene layer 1 side and the high density polyethylene layer 2 side.

From the viewpoint of improving the flexibility of the stretched polyethylene film, the thickness of the medium density polyethylene layer is preferably equal to or more than 2 $\mu$m, more preferably equal to or more than 3 $\mu$m, still more preferably equal to or more than 5 $\mu$m, and even still more preferably equal to or more than 8 $\mu$m, and is preferably equal to or less than 30 $\mu$m, more preferably equal to or less than 25 $\mu$m, still more preferably equal to or less than 20 $\mu$m, yet still more preferably equal to or less than 15 $\mu$m, even more preferably equal to or less than 13 $\mu$m, and even still more preferably equal to or less than 11 $\mu$m.

From the viewpoint of maintaining the tear resistance of the stretched polyethylene film and further improving the mechanical strength, the thickness of the entire stretched polyethylene film is preferably equal to or more than 10 $\mu$m, more preferably equal to or more than 13 $\mu$m, and still more preferably equal to or more than 15 $\mu$m. From the viewpoint of further improving the tear resistance, handleability, moldability, bag-making suitability, light weight, and the like of the stretched polyethylene film, the thickness of the entire stretched polyethylene film is preferably equal to or less than 100 $\mu$m, more preferably equal to or less than 70 $\mu$m, still more preferably equal to or less than 50 $\mu$m, yet still more preferably equal to or less than 40 $\mu$m, even more preferably equal to or less than 30 $\mu$m, and even still more preferably equal to or less than 25 $\mu$m.

Next, the physical properties of the stretched polyethylene film will be described.

In the stretched polyethylene film of the present embodiment, from the viewpoint of further improving the balance of the thermal dimensional stability, the moldability, the mechanical properties, the transparency, the bag-making properties, the handleability, and the packaging suitability of the stretched polyethylene film, the tensile modulus $T_1$ of the stretched polyethylene film in the MD direction, which is measured using a tensile tester under the conditions of a measurement temperature of $23 \pm 2°C$, a relative humidity of $50 \pm 5\%$ RH, and a tensile speed of 5 mm/min in accordance with JIS K7127: 1999, is preferably equal to or more than 800 MPa, more preferably equal to or more than 850 MPa, still more preferably equal to or more than 900 MPa, yet still more preferably equal to or more than 950 MPa, even more preferably equal to or more than 1000 MPa, yet even more preferably equal to or more than 1050 MPa, even still more preferably equal to or more than 1100 MPa, and yet even still more preferably equal to or more than 1200 MPa, and from the viewpoint of further improving the balance of the thermal dimensional stability, the bag-making properties, and the packaging suitability of the stretched polyethylene film, the tensile modulus $T_1$ is preferably equal to or less than 1500 MPa, more preferably equal to or less than 1450 MPa, still more preferably equal to or less than 1400 MPa, and even still more preferably equal to or less than 1350 MPa.

From the viewpoint of further improving the balance of the moldability, the mechanical properties, the transparency, the bag-making properties, the handleability, and the packaging suitability of the stretched polyethylene film, the tensile modulus $T_2$ of the stretched polyethylene film in the TD direction is preferably equal to or more than 700 MPa, more preferably equal to or more than 750 MPa, still more preferably equal to or more than 800 MPa, yet still more preferably equal to or more than 850 MPa, even more preferably equal to or more than 900 MPa, yet even more preferably equal to or more than 920 MPa, and even still more preferably equal to or more than 925 MPa. From the viewpoint of further improving the balance of the bag-making properties and the packaging suitability of the stretched polyethylene film, the tensile modulus $T_2$ is preferably equal to or less than 1400 MPa, more preferably equal to or less than 1300 MPa, still more preferably equal to or less than 1200 MPa, yet still more preferably equal to or less than 1180 MPa, even more preferably equal to or less than 1150 MPa, and even still more preferably equal to or less than 1130 MPa.

In the stretched polyethylene film of the present embodiment, the total value of the tensile modulus $T_1$ in the MD direction and the tensile modulus $T_2$ in the TD direction of the stretched polyethylene film, which is measured using a tensile tester under the conditions of a measurement temperature of $23 \pm 2°C$, a relative humidity of $50 \pm 5\%$ RH, and a tensile speed of 5 mm/min according to JIS K7127: 1999, is preferably equal to or more than 1500 MPa, more preferably equal to or more than 1600 MPa, still more preferably equal to or more than 1700 MPa, yet still more preferably equal to or more than 1800 MPa, even more preferably equal to or more than 1900 MPa, yet even more preferably equal to or more than 2000 MPa, and even still more preferably equal to or more than 2050 MPa, from the viewpoint of further improving the performance balance of transparency, rigidity, and heat resistance, and heat fusion strength and thermal dimensional stability, and further improving the stiffness of the stretched polyethylene film, and is preferably equal to or less than 2900 MPa, more preferably equal to or less than 2800 MPa, still more preferably equal to or less than 2700 MPa, yet still more preferably equal to or less than 2600 MPa, even more preferably equal to or less than 2500 MPa, and even still more preferably equal to or less than 2400 MPa, from the viewpoint of further improving the industrial continuous productivity by preventing problems such as cutting from occurring during the molding of the stretched polyethylene film and facilitating continuous stretching and molding of the film.

Such a tensile modulus is a substitute value for quantitatively measuring the stiffness of the film, and can be adjusted, for example, by adjusting the type and the content ratio of the high density polyethylene layer 1, the high density polyethylene layer 2, and the medium density polyethylene layer included in the stretched polyethylene film, the thickness and the stretch ratio of the stretched polyethylene film, and the like.

In the stretched polyethylene film of the present embodiment, from the viewpoint of further improving the transparency of the stretched polyethylene film, the Haze per one stretched polyethylene film, which is measured in accordance with JIS K 7136: 2000, is preferably equal to or less than 16.0%, more preferably equal to or less than 15.8%, still more preferably equal to or less than 15.5%, even more preferably equal to or less than 15.3%, and even still more preferably equal to or less than 15.0%. The lower limit of the Haze per one stretched polyethylene film is not limited, but is, for example, equal to or more than 0.1%, and may be equal to or more than 1.0%, equal to or more than 3.0%, or equal to or more than 5.0%.

In the stretched polyethylene film according to the present embodiment, the amorphous thickness obtained from a peak in a diffraction angle $2\theta$ range of $0.2°$ to $0.4°$ in the MD direction by small angle X-ray scattering (SAXS) measurement is preferably less than 12.5 nm, more preferably equal to or less than 12.4 nm, still more preferably equal to or less than 12.2 nm, yet still more preferably equal to or less than 12.0 nm, even more preferably equal to or less than 11.7 nm, and even still more preferably equal to or less than 11.5 nm, from the viewpoint of improving the flexibility of the stretched polyethylene film. The lower limit of the amorphous thickness obtained from the peak in a diffraction angle $2\theta$ range of $0.2°$ to $0.4°$ in the MD direction by small angle X-ray scattering (SAXS) measurement is not limited, but is, for example, equal to or more than 9.0 nm, and may be equal to or more than 9.5 nm, equal to or more than 10.0 nm, equal to or more than 10.5 nm, and equal to or more than 11.0 nm.

Such an amorphous thickness can be adjusted, for example, by adjusting the type and the content ratio of the high density polyethylene layer 1, the high density polyethylene layer 2, and the medium density polyethylene layer included in the stretched polyethylene film, the thickness and the stretch ratio of the stretched polyethylene film, and the like.

According to the stretched polyethylene film of the present embodiment, by adopting a three-layer structure in which the medium density polyethylene layer is interposed between the high density polyethylene layer 1 and the high density polyethylene layer 2, and setting the amorphous thickness of the stretched polyethylene film to be equal to or less than the above-described upper limit value, the flexibility of the stretched polyethylene film can be further improved.

In the stretched polyethylene film of the present embodiment, the full width at half maximum (FWHM) of a peak in a diffraction angle $2\theta$ range of $0.2°$ to $0.4°$ in the MD direction obtained from the small angle X-ray scattering (SAXS) measurement is preferably equal to or less than $0.21°$, more preferably equal to or less than $0.20°$, still more preferably equal to or less than $0.19°$, and even still more preferably equal to or less than $0.18°$, from the viewpoint of increasing the degree of crystallinity of the stretched polyethylene film surface layer to suppress the formation of a fragile layer and further improving slip properties. From the viewpoint of further improving film forming properties, bag making workability, lamination strength, and thermal dimensional stability, the full width at half maximum (FWHM) of the peak of the stretched polyethylene film in a diffraction angle $2\theta$ range of $0.2°$ to $0.4°$ in the MD direction is preferably equal to or more than $0.05°$, more preferably equal to or more than $0.10°$, still more preferably equal to or more than $0.13°$, yet still more preferably equal to or more than $0.15°$, even more preferably equal to or more than $0.16°$, and even still more preferably equal to or more than $0.17°$.

The full width at half maximum (FWHM) of the peak in a diffraction angle $2\theta$ range of $0.2°$ to $0.4°$ in the MD direction, which is obtained from the small angle X-ray scattering (SAXS) measurement, can be adjusted, for example, by adjusting the type and the content ratio of the high density polyethylene layer 1, the high density polyethylene layer 2, and the medium density polyethylene layer included in the stretched polyethylene film, the thickness and the stretch ratio of the stretched polyethylene film, and the like.

In the stretched polyethylene film of the present embodiment, from the viewpoint of further improving thermal dimensional stability and bag-making properties, the thermal shrinkage rate of the stretched polyethylene film in the MD direction when subjected to a heat treatment at 100°C for 15 minutes is preferably equal to or less than 6.0%, more preferably equal to or less than 5.5%, still more preferably equal to or less than 5.0%, yet still more preferably equal to or less than 4.5%, even more preferably equal to or less than 4.3%, yet even more preferably equal to or less than 4.1%, and even still more preferably equal to or less than 4.0%, and may be equal to or more than 0.1%, equal to or more than 0.5%, equal to or more than 1.0%, equal to or more than 1.5%, equal to or more than 2.0%, or equal to or more than 2.5%.

In addition, the thermal shrinkage rate of the stretched polyethylene film can be measured in accordance with JIS C2151: 2019.

In the stretched polyethylene film of the present embodiment, from the viewpoint of further improving thermal dimensional stability and bag-making properties, the thermal shrinkage rate of the stretched polyethylene film in the MD direction when subjected to a heat treatment at 120°C for 15 minutes is preferably equal to or less than 25.0%, more preferably equal to or less than 23.0%, still more preferably equal to or less than 22.5%, yet still more preferably equal to or less than 22.0%, even more preferably equal to or less than 21.0%, and even still more preferably equal to or less than 20.0%, and may be equal to or more than 1.0%, equal to or more than 3.0%, equal to or more than 5.0%, equal to or more than 10.0%, or equal to or more than 15.0%.

In a case where at least one surface of the stretched polyethylene film is a non-corona-treated surface, from the viewpoint of further improving the heat resistance, the heat fusion strength when the non-corona-treated surface sides of the stretched polyethylene film are laminated and heat-fused at 140°C is preferably equal to or less than 4.0 *N/15* mm and more preferably equal to or less than 3.8 N/15 mm. The lower limit of the heat fusion strength is not limited, but is, for example, equal to or more than 0.1 *N/15* mm.

The heat fusion strength is measured as follows.

The non-corona-treated surfaces of two stretched polyethylene films cut to a width of 15 mm are heat-fused under the conditions of 140°C, a pressure of 2.0 kgf, and a sealing time of 1.0 second to obtain a laminated film. Next, the laminated film cut to a width of 15 mm is used, the two stretched polyethylene films are peeled off under the conditions of a peeling angle of 90°, a peeling rate of 300 mm/min, and tensile in the MD direction, and the peeling strength at that time is defined as the heat fusion strength (N/15 mm).

In the stretched polyethylene film of the present embodiment, from the viewpoint of further improving the balance between adhesiveness and ease of opening, the lamination strength measured in accordance with JIS Z 0238: 1998 is preferably equal to or more than 0.7 N/15 mm and more preferably equal to or more than 0.8 N/15 mm, and is preferably equal to or less than 10.0 N/15 mm, more preferably equal to or less than 5.0 N/15 mm, still more preferably equal to or less than 3.0 N/15 mm, and even still more preferably equal to or less than 2.0 N/15 mm.

The lamination strength is measured as follows.

A test piece of 297 cm × 210 cm is cut out from the stretched polyethylene film, and the corona-treated surface side of the test piece and corona-treated surface side of a cast LLDPE film having a thickness of 50 μm, of which one surface has been subjected to a corona treatment, are laminated with an ester-based adhesive, and aging is performed at 40°C for 3 days. Next, the test piece is cut out to a width of 15 mm, and using a tensile tester, the peeling strength in a case of peeling in the MD direction at a peeling angle of 90°, a distance between chucks of 100 mm, and a crosshead speed of 300 mm/min is obtained in accordance with JIS Z 0238: 1998, and the obtained value is defined as the lamination strength.

In the stretched polyethylene film of the present embodiment, the static friction coefficient (tan θ) of the surface of the stretched polyethylene film, which is measured by a slip tester, is preferably equal to or more than 0.20 and more preferably equal to or more than 0.25, and is preferably equal to or less than 0.65, more preferably equal to or less than 0.60, still more preferably equal to or less than 0.55, and even still more preferably equal to or less than 0.50.

In a case where any one of the high density polyethylene layer 1 or the high density polyethylene layer 2 of the stretched polyethylene film is subjected to a corona treatment, the static friction coefficient (tan θ) of the surface of the stretched polyethylene film may be measured between the treated surfaces, between the non-treated surfaces, or between the treated surface and the non-treated surface.

In particular, from the viewpoint of further improving the handleability of the stretched polyethylene film, it is preferable that the static friction coefficient (tan θ) of the surface on the non-corona-treated side is within the above-described range. The static friction coefficient (tan θ) of the surface of the stretched polyethylene film on the non-corona-treated side is preferably equal to or more than 0.20 and more preferably equal to or more than 0.25, and is preferably equal to or less than 0.65, more preferably equal to or less than 0.60, still more preferably equal to or less than 0.55, and even still more preferably equal to or less than 0.50.

The static friction coefficient (tan θ) of the surface of the stretched polyethylene film on the non-corona-treated surface side is measured by the following method.

Two stretched polyethylene films cut into a size of 50 mm × 75 mm (hereinafter, referred to as a stretched polyethylene film 1 and a stretched polyethylene film 2) are prepared, and one stretched polyethylene film 1 of the two stretched polyethylene films is fixed to an inclined plate such that the non-corona-treated surface side is on the upper side.

Next, a friction body having a bottom (having a size of 41 mm $\times$ 26 mm) composed of brass is fixed to the center of the surface of the other stretched polyethylene film 2 on the opposite side of the non-corona-treated surface side, and a weight is attached onto the friction body so that the mass applied from the friction body to the stretched polyethylene film 2 is 150 g. Next, the surfaces of the two stretched polyethylene films 1 and 2 on the non-corona-treated surface side are overlapped. Next, the inclined plate is inclined at a speed of 1°/sec, and a value of tan θ is obtained from an angle θ when the stretched polyethylene film 2 on the upper portion slips out.

In a case of measuring the static friction coefficient (tan θ) of the surface on the corona-treated surface side, the measurement is performed by replacing the non-corona-treated surface side with the corona-treated surface side in the measurement method of the static friction coefficient (tan θ) of the surface on the non-corona-treated surface side.

In the stretched polyethylene film of the present embodiment, the puncture strength in a direction of the non-corona-treated surface from the corona-treated surface, which is measured under the conditions of 23°C $\pm$ 2°C and 50% RH $\pm$ 5% in accordance with JIS Z1707: 1997, is preferably equal to or more than 2.5 N, more preferably equal to or more than 3.0 N, still more preferably equal to or more than 4.0 N, and even still more preferably equal to or more than 4.3 N, and is preferably equal to or less than 8.0 N, more preferably equal to or less than 7.8 N, still more preferably equal to or less than 7.5 N, yet still more preferably equal to or less than 7.3 N, yet still more preferably equal to or less than 7.0 N, even more preferably equal to or less than 6.5 N, yet even more preferably equal to or less than 6.0 N, even still more preferably equal to or less than 5.5 N, and yet even still more preferably equal to or less than 5.0 N, from the viewpoint of further suppressing the tearing of the packaged body.

From the viewpoint of further improving film forming properties and bag making workability, the tear strength of the stretched polyethylene film in the MD direction, which is measured using a light load tearing tester under the condition of a test weight mass of 96.09 g, is preferably equal to or more than 100 mN, more preferably equal to or more than 150 mN, still more preferably equal to or more than 180 mN, yet still more preferably equal to or more than 200 mN, even more preferably equal to or more than 230 mN, and even still more preferably equal to or more than 250 mN. From the viewpoint of further improving tear resistance while maintaining heat sealability and stiffness of the stretched polyethylene film, the tear strength is preferably equal to or less than 600 mN, more preferably equal to or less than 580 mN, still more preferably equal to or less than 550 mN, yet still more preferably equal to or less than 530 mN, even more preferably equal to or less than 500 mN, yet even more preferably equal to or less than 490 mN, and even still more preferably equal to or less than 450 mN.

In order to achieve such a tear strength, the density, thickness, and the like of each of the high density polyethylene layer 1, the high density polyethylene layer 2, and the medium density polyethylene layer included in the stretched polyethylene film may be appropriately adjusted.

The tear strength in the MD direction is measured as follows.

A test piece having a size of 63.5 mm in the MD direction and 50 mm in the TD direction is cut out from the stretched polyethylene film. For one test piece above, using a light load tearing tester, the tear strength (mN) in the MD direction is measured under the conditions of a pendulum weight of 96.09 g, a tear length of 12.7 mm, and a pendulum lifting angle of 90°.

As the light load tearing tester, for example, a model-D manufactured by Toyo Seiki Seisaku-sho, Ltd. can be used.

In the stretched polyethylene film of the present embodiment, the number of pinholes generated in the stretched polyethylene film, which is measured by a bending test of 3000 times at a bending angle of 440 degrees and a bending speed of 40 times/min in an atmosphere of -30°C using a Gelbo Flex Tester, is preferably equal to or less than 2500 pinholes/$m^2$, more preferably equal to or less than 2300 pinholes/$m^2$, still more preferably equal to or less than 2200 pinholes/$m^2$, even more preferably equal to or less than 2100 pinholes/$m^2$, and even still more preferably equal to or less than 2000 pinholes/$m^2$.

The lower limit value of the number of pinholes generated in the stretched polyethylene film is not limited, but is, for example, equal to or more than 100 pinholes/$m^2$, and may be equal to or more than 300 pinholes/$m^2$, equal to or more than 500 pinholes/$m^2$, equal to or more than 800 pinholes/$m^2$, or equal to or more than 1000 pinholes/$m^2$.

The number of pinholes represents an index of the bending resistance performance of the stretched polyethylene film of the present embodiment, and the smaller the number of pinholes, the better the bending resistance performance.

In a case where the number of pinholes generated in the stretched polyethylene film is within the above-described range, the generation of pinholes due to bending during low temperature filling or low temperature transportation can be further suppressed.

As the Gelbo Flex Tester, for example, a tester manufactured by Tester Sangyo Co., Ltd. can be used.

<Identification of High Density Polyethylene Layer and Medium Density Polyethylene Layer>

The fact that the stretched polyethylene film of the present embodiment includes the high density polyethylene layer 1, the medium density polyethylene layer, and the high density polyethylene layer 2 can be determined, for example, by measuring the melting point of each layer after the stretched polyethylene film is cut in a cross section.

The melting point of the high density polyethylene layer 1 and the high density polyethylene layer 2 is, for example, in a range of equal to or higher than 130°C and equal to or lower than 140°C, and the melting point of the medium density polyethylene layer is, for example, in a range of equal to or higher than 110°C and equal to or lower than 129°C.

<Method of Manufacturing Stretched Polyethylene Film>

From the viewpoint of further improving orientation crystallinity and further improving mechanical strength, the stretched polyethylene film of the present embodiment is preferably uniaxially or biaxially stretched, and from the viewpoint of further improving productivity, the stretched polyethylene film is preferably uniaxially stretched. In addition, by uniaxially stretching the film in the MD direction, the tensile modulus $T_1$ in the MD direction can be further improved.

The stretched polyethylene film can be obtained, for example, by co-extruding a high density polyethylene resin for forming the high density polyethylene layer 1, a medium density polyethylene resin for forming the medium density polyethylene layer, and a high density polyethylene resin for forming the high density polyethylene layer 2 in this order in a film shape, and stretching the film using a known method of manufacturing a stretched film such as a uniaxial stretching method, a simultaneous biaxial stretching method, or a sequential biaxial stretching method.

The molding device and the molding conditions are not particularly limited, and a molding device and molding conditions known in the related art can be adopted. As the molding device, a T-die extruder, a multilayer T-die extruder, an inflation molding machine, a multilayer inflation molding machine, or the like can be used.

As the conditions for the uniaxial stretching method and the biaxial stretching method, for example, known conditions for manufacturing a stretched polyethylene film can be adopted. More specifically, in a case of the uniaxial stretching method, for example, the longitudinal stretching temperature may be in a range of 100°C to 145°C, and the longitudinal stretch ratio may be in a range of 4.5 to 6 times. In the sequential biaxial stretching method, for example, the longitudinal stretching temperature may be in a range of 100°C to 145°C, the longitudinal stretch ratio may be in a range of 4.5 to 6 times, the transverse stretching temperature may be in a range of 110°C to 160°C, and the transverse stretch ratio may be in a range of 9 to 11 times.

<Use of Stretched Polyethylene Film/Packaging Material/Food Packaged Body>

Specifically, the stretched polyethylene film of the present embodiment can be suitably used as a food packaging film.

In addition, the stretched polyethylene film of the present embodiment can be suitably used as a packaging material.

In a case of using the film as a packaging material, the packaging material may be formed of only the stretched polyethylene film of the present embodiment, or may be formed by laminating other layers. Examples of the other layers include a base material layer, a coating layer, an adhesive layer, and a heat seal layer. From the viewpoint of ease of recycling, in a case where these layers are laminated, it is preferable that the layers are formed of a polyethylene-based resin.

In addition, the packaging material according to the present embodiment can be suitably used for a food packaged body. The food packaged body is used, for example, for the purpose of packaging food, and specifically includes the packaging material of the present embodiment and food inside the packaging material.

In the food packaged body, depending on the use, only a part of the food packaged body may be composed of the packaging material of the present embodiment, or substantially the entire food packaged body may be composed of the packaging material of the present embodiment.

A method of manufacturing a food packaged body from the stretched polyethylene film or the packaging material is not particularly limited. A method known in the field of packaging material and the packaged body, such as heat sealing or fusing, can be appropriately used.

The stretched polyethylene film according to the present embodiment is preferably used for a food packaged body which requires good flexibility. The form of the food packaged body can be, for example, a folding bag or a standing pouch (pouch packaging). These forms are preferable from the viewpoint of improving flexibility.

In addition, in a case where the food packaged body (a packaging bag or the like) is formed of the stretched polyethylene film or the packaging material of the present embodiment, it is preferable that the corona-treated surface is on the inner surface side and the non-corona-treated surface is on the outer surface side.

In addition, in a case where another layer is further laminated on the stretched polyethylene film as described above, it is preferable that the layer is laminated on the corona-treated surface side. That is, in a case where the laminate formed using the stretched polyethylene film of the present embodiment is used for a food packaged body (a packaging bag or the like), it is preferable that the stretched polyethylene film of the present embodiment serves as the outermost layer of the food packaged body.

The food packaged in the food packaged body is not limited, and examples thereof include baked goods, rice goods, snack foods, seasoned powder for sprinkling over rice, and grain powder.

Although the embodiments of the present invention have been described above, these are examples of the present invention, and various configurations other than the above can be adopted. Further, the present invention is not limited to the above-described embodiments, and modifications, improvements, and the like within a range in which the object of the present invention can be achieved are included in the present invention.

Examples

<Raw Materials>

The materials used in Examples and Comparative Examples are shown below.

The density was measured in accordance with JIS K 7112: 1999. The MFR was measured under the conditions of 190°C and a load of 2.16 kg in accordance with ASTM D1238. The melting point was measured using a differential scanning calorimeter (DSC) .

(High Density Polyethylene)

· High density polyethylene (HDPE 1): density: 949 kg/m$^3$, MFR: 1.1 g/10 min, melting point: 130°C

(Medium Density Polyethylene)

· Medium density polyethylene (MDPE 1): density: 916 kg/m$^3$, MFR: 2.3 g/10 min, melting point: 116°C
· Medium density polyethylene (MDPE 2): density: 918 kg/m$^3$, MFR: 3.8 g/10 min, melting point: 116°C
· Medium density polyethylene (MDPE 3): density: 923 kg/m$^3$, MFR: 1.5 g/10 min, melting point: 121°C
· Medium density polyethylene (MDPE 4): density: 925 kg/m$^3$, MFR: 1.9 g/10 min, melting point: 122°C
· Medium density polyethylene (MDPE 5): density: 937 kg/m$^3$, MFR: 1.8 g/10 min, melting point: 127°C
· Medium density polyethylene (MDPE 6): density: 942 kg/m$^3$, MFR: 2.9 g/10 min, melting point: 127°C

<Manufacturing of Stretched Polyethylene Film>

[Examples 1 to 3 and Comparative Example 1]

With the formulations shown in Table 1, high density polyethylene, medium density polyethylene, and high density polyethylene of Examples and Comparative Examples were extruded in this order using a T-die to form films, thereby obtaining case sheets. Then, the cast sheets were then subjected to uniaxial stretching treatment. Then, after uniaxial stretching, the high density polyethylene layer 2 side of the cast sheet was subjected to a corona treatment, and a stretched polyethylene film of each example was prepared. The extrusion conditions and uniaxial stretching conditions are shown below.

Multilayer extruder: 60 mm φ multilayer T-die extruder (L/D = 27, manufactured by Screw Seiki Corporation)
Extrusion set temperature: 230°C, processing speed: 25 m/min
Longitudinal stretching temperature: 110°C to 130°C
Longitudinal stretch ratio: 5 times

The following evaluations were performed on the obtained stretched polyethylene film of each example. Each of the obtained results is shown in Table 1.

<Small Angle X-Ray Scattering (SAXS) Measurement of Stretched Polyethylene Film>

In the stretched polyethylene film of each example, the measurement film was set in the following device such that the MD direction of the film was set vertically, the TD direction was set horizontally, and the angle formed by the X-ray source direction and the film surface was perpendicular. Small angle X-ray scattering (SAXS) measurement was performed with the following device and conditions.

Device: Ultima IV (small angle scattering attachment system), manufactured by RIGAKU Corporation
X-ray incidence direction: film normal direction
X-ray wavelength: 0.15418 nm

Optical unit specifications:

1. Optical system selection slit: 0.03 mm for small angle scattering (= 1st slit)
2. DS: scattering prevention slit 1.00 mm (= 2nd slit)
3. Incidence side solar slit; 5° of flexible optical system was used.
4. Distance between 1st slit and 2nd slit: 70 mm
5. Distance between 2nd slit and sample: 98 mm
6. Vacuum path length: 100 mm (front surface of light-receiving slit box, installed on dedicated stand)
7. RS, SS: scattering slit 0.20 mm, light-receiving slit 0.10 mm
8. Camera length: 285 mm
9. Light receiving side solar slit; 5° of flexible optical system was used.
10. Monochromatization; none (monochromatization on the incident side by a multilayer film mirror)
11. Detector: scintillation detector (HV: 762 V) (one-dimensional) manufactured by RIGAKU Corporation

X-ray irradiation conditions:

A. Scanning axis: 2 theta
B. Measurement method: continuous
C. Scan start angle: 0.1°
D. Scan end angle: 1.0°
E. Sampling width: 0.02°
F. Scan speed: 0.5°/min
G. Voltage and current: 40 kV - 40 mA
H. Number of sheets of sample lamination: The samples were laminated to have a thickness of about 0.5 mm in a state where the sample orientations were aligned in order to obtain a sufficient scattering intensity.

Air scatter correction of the detector was performed on the X-ray scattering pattern obtained under the above measurement conditions to obtain a SAXS profile I (q). Using the magnitude of the scattering vector of the peak derived from the crystal long period of the SAXS profile I(q), the diffraction angle θ was calculated from Equation (1), and then the obtained value was substituted into Bragg's Equation (2) to calculate the crystal long period (d).

$$q = 4\pi\sin\theta/\lambda \quad \ldots (1)$$

θ: diffraction angle
q: magnitude of scattering vector
λ: X-ray wavelength

$$2d\sin\theta = \lambda \quad \ldots (2)$$

d: crystal long period
θ: diffraction angle
λ: X-ray wavelength

In addition, with reference to the structure analysis of the crystalline polymer material by the scattering method in Nichias technical information Vol. 2 (2014) No. 365, the SAXS profile I (q) was Fourier-transformed by the following (3) to calculate the electron density correlation function $\gamma(r)$. $\gamma(r)$ has a special property that can be directly used for characterizing the structure, and the amorphous thickness (da) of the stretched polyethylene film of each example obtained as the structure information was calculated. In addition, r indicates a distance (nm).
[Equation 1]

$$\gamma(r) = \frac{1}{2\pi^2} \int_0^\infty I(q) q^2 \cos(qr) dq \quad \cdots (3)$$

In addition, a difference value of the amorphous thickness was calculated from the crystal long period (d) as a crystal thickness (dc). In addition, the full width at half maximum (FWHM) of a peak in a diffraction angle $2\theta$ range of 0.2° to 0.4° in the MD direction was calculated using X-ray analysis software PDXL-2 (manufactured by RIGAKU Corporation). Specifically, the air scattering was removed from the SAXS profile I (q) obtained above. The obtained values were separated into crystal scattering and amorphous scattering using the above-described software, and the full width at half maximum (FWHM) of the peak in a diffraction angle $2\theta$ range of 0.2° to 0.4° in the MD direction was calculated from the peak fitting result of the crystal scattering according to the following (Analysis Conditions).

(Analysis Conditions)

Fitting peak shape: split pseudo-Voigt function
Crystallite size distribution type: Lorentz model

<Differential Scanning Calorimetry>

A test piece having a size of about 5.0 mg was cut out from the stretched polyethylene film of each example. Next, a first differential scanning calorimetry (1st Run) including a process of raising the temperature from -50°C to 200°C at a temperature rising rate of 10°C/min, an isothermal process of holding the temperature at 200°C for 10 minutes, and a process of lowering the temperature from 200°C to -50°C at a temperature falling rate of 10°C/min, and a second differential scanning calorimetry (2nd Run) including a process of raising the temperature from - 50°C to 200°C at a temperature rising rate of 10°C/min were continuously performed on the test piece using a differential scanning calorimeter (product name: Q200 DSC, manufactured by TA Instruments) under a nitrogen gas flow.
In the DSC curve 1 obtained by the first differential scanning calorimetry, the amount of heat of fusion ($\Delta H_m$) (J/g) was determined from the endothermic peak A observed in a range of equal to or higher than 10°C and equal to or lower than 160°C.

<Haze>

In accordance with JIS K7136: 2000, the haze per one stretched polyethylene film was measured using a haze meter (NDH5000, manufactured by Nippon Denshoku Industries Co., Ltd.).

<Tensile Modulus>

A test piece of 15 mm $\times$ 15 cm was cut out from the stretched polyethylene film of each example. Next, using a tensile tester manufactured by Orientec Co., Ltd., the tensile modulus $T_1$ in the MD direction and the tensile modulus $T_2$ in the TD direction of the test piece were measured under the conditions of a measurement temperature of 23 $\pm$ 2°C, a relative humidity of 50 $\pm$ 5% RH, and a tensile speed of 5 mm/min, in accordance with JIS K7127: 1999. From the obtained values, the total value of $T_1$ and $T_2$ was calculated.

<Thermal Shrinkage Rate of Stretched Polyethylene Film in MD Direction at 100°C>

The thermal shrinkage rate of the stretched polyethylene film in the MD direction at 100°C was measured in accordance with JIS C2151: 2019.
A test piece of 10 cm $\times$ 10 cm was cut out from the stretched polyethylene film of each example. Next, the test piece was subjected to a heat treatment at 100°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as $MD_{100}$ [cm], and the thermal shrinkage rate [%] in the MD direction was calculated by $100 \times (10 - MD_{100})/10$. The above measurement was carried out three times, and the average value of the obtained measured values was adopted as the thermal shrinkage rate of the stretched polyethylene film at 100°C.

<Thermal Shrinkage Rate of Stretched Polyethylene Film in MD Direction at 120°C>

The thermal shrinkage rate of the stretched polyethylene film in the MD direction at 120°C was measured in accordance with JIS C2151: 2019.

A test piece of 10 cm × 10 cm was cut out from the stretched polyethylene film of each example. Next, the test piece was subjected to a heat treatment at 120°C for 15 minutes. In this case, the test piece was suspended and heated in a hot air circulation type constant-temperature tank (product name: DRM620DE, manufactured by ADVANTEC) in a state where no force was applied. Next, the test piece was cooled to room temperature, and then the length of the test piece was measured. The length of the test piece after the heat treatment in the MD direction was defined as $MD_{120}$ [cm], and the thermal shrinkage rate [%] in the MD direction was calculated by $100 \times (10 - MD_{120})/10$. The above measurement was carried out three times, and the average value of the obtained measured values was adopted as the thermal shrinkage rate of the stretched polyethylene film at 120°C.

<Static Friction Coefficient>

Two stretched polyethylene films of each example cut into a size of 50 mm × 75 mm (hereinafter, referred to as a stretched polyethylene film 1 and a stretched polyethylene film 2) were prepared, and one stretched polyethylene film 1 of the two stretched polyethylene films was fixed to an inclined plate such that the non-corona-treated surface side was on the upper side. Next, a friction body having a bottom (having a size of 41 mm × 26 mm) composed of brass was fixed to the center of the surface of the other stretched polyethylene film 2 on the opposite side of the non-corona-treated surface side, and a weight was attached onto the friction body so that the mass applied from the friction body to the stretched polyethylene film 2 was 150 g. Next, the surfaces of the two stretched polyethylene films 1 and 2 on the non-corona-treated surface side were overlapped. Next, the inclined plate was inclined at a speed of 1°/sec, the value of tan θ was obtained from the angle θ at which the stretched polyethylene film 2 on the upper portion slipped out, and the value was used as the static friction coefficient of the surface on the non-corona-treated surface side.

<Heat Fusion Strength>

The non-corona-treated surfaces of two stretched polyethylene films of each example cut to a width of 15 mm were heat-fused under the conditions of 140°C, a pressure of 2.0 kgf, and a sealing time of 1.0 second to obtain a laminated film. Next, the obtained laminated film was cut to a width of 15 mm, the two stretched polyethylene films were peeled off under the conditions of a peeling angle of 90°, a peeling rate of 300 mm/min, and tensile in the MD direction, and the peeling strength at that time was defined as the heat fusion strength (N/15 mm) .

<Lamination Strength>

A test piece of 297 cm × 210 cm was cut out from the stretched polyethylene film of each example, and the corona-treated surface side of the test piece and the corona-treated surface side of a cast LLDPE film (TUX FCS#50, manufactured by Mitsui Chemicals Tohcello, Inc.) having a thickness of 50 μm, of which one surface was subjected to a corona treatment, were laminated with an ester-based adhesive (TAKELAC A310/TAKENATE A3/ethyl acetate = 12/1/7), and aging was carried out at 40°C for 3 days. Next, a test piece was cut out to a width of 15 mm, and using a tensile tester (Tensilon universal tester RTC-1225, manufactured by Orientec Co., Ltd.), the peeling strength in a case of peeling in the MD direction at a peel angle of 90°, a distance between chucks of 100 mm, and a crosshead speed of 300 mm/min was obtained in accordance with JIS Z 0238: 1998. The obtained value was defined as the lamination strength.

<Puncture Strength>

As an indicator of flexibility, the puncture strength was measured as follows.

A test piece having a width of 60 mm and a length of 200 to 300 mm was cut out from the stretched polyethylene film of each example. Next, using Tensilon RTC-1225 manufactured by Orientec Co., Ltd., the puncture strength (N) in a direction from the corona-treated surface to the non-corona-treated surface was measured under conditions of $23 \pm 2°C$ and $50 \pm 5\%$ RH in accordance with JIS Z1707: 1997.

<Bending Resistance Performance>

As an indicator of flexibility, the bending resistance was evaluated as follows.

A test piece of 297 cm × 210 cm was cut out from the stretched polyethylene film of each example, a bending test was performed 3,000 times in an atmosphere of -30°C at a bending angle of 440 degrees and a bending rate of 40 times/min using a Gelbo Flex Tester (manufactured by Tester Sangyo Co., Ltd.), a bag was formed with the test piece after the bending test, and the number of pinholes generated was measured with an ageless seal check solution manufactured by Mitsubishi Gas Chemical Company, Inc.

<Tear Strength>

As an indicator of flexibility, the tear strength was measured as follows.

A test piece having a size of 63.5 mm in the MD direction and 50 mm in the TD direction was cut out from the stretched polyethylene film of each example. For the above-described test piece, using a light load tearing tester (model-D, manufactured by Toyo Seiki Seisaku-sho, Ltd.), the tear strength (mN) in the MD direction was measured under the conditions of a pendulum weight of 96.09 g, a tear length of 12.7 mm, and a pendulum lifting angle of 90°.

The flexibility of the stretched polyethylene film was evaluated according to the following criteria.

(Criteria)

A (good): all of the following (i) to (iii) are satisfied.

B (defective): there is one or more items that are not satisfied in the following (i) to (iii).

(i) The puncture strength is equal to or more than 2.5 N.
(ii) The bending resistance (the number of generated pinholes) is equal to or less than 2500 pinholes/m$^2$.
(iii) The tear strength in the MD direction is equal to or more than 100 mN.

[Table 1]

Table 1

| | | | Example 1 | Example 2 | Example 3 | Example 4 | Comparative Example 1 | Comparative Example 2 |
|---|---|---|---|---|---|---|---|---|
| Configuration | Outer layer 1 (non-corona-treated surface) | Type | HDPE1 | HDPE1 | HDPE1 | HDPE1 | HDPE1 | HDPE1 |
| | | Thickness ($\mu$m) | 5 | 5 | 5 | 5 | 4 | 4 |
| | Intermediate layer | Type | MDPE1 | MDPE2 | MDPE3 | MDPE4 | MDPE5 | MDPE6 |
| | | Thickness ($\mu$m) | 10 | 10 | 10 | 10 | 12 | 12 |
| | Outer layer 2 (corona-treated surface) | Type | HDPE1 | HDPE1 | HDPE1 | HDPE1 | HDPE1 | HDPE1 |
| | | Thickness ($\mu$m) | 5 | 5 | 5 | 5 | 4 | 4 |
| HDPE layer | Density | [kg/m$^3$] | 949 | 949 | 949 | 949 | 949 | 949 |
| | MFR | [g/10 min] | 1.1 | 1.1 | 1.1 | 1.1 | 1.1 | 1.1 |
| MDPE layer | Density | [kg/m$^3$] | 916 | 918 | 923 | 925 | 937 | 942 |
| | MFR | [g/10 min] | 2.3 | 3.8 | 1.5 | 1.9 | 1.8 | 2.9 |
| Layer ratio | | | 1/2/1 | 1/2/1 | 1/2/1 | 1/2/1 | 1/3/1 | 1/3/1 |
| HDPE content (in entire stretched polyethylene film) | | [% by mass] | 50 | 50 | 50 | 50 | 40 | 40 |
| FWHM | | [deg] | 0.20 | 0.19 | 0.18 | 0.17 | 0.17 | 0.17 |
| $\Delta H_m$ | | [J/g] | 159 | 154 | 152 | 152 | 168 | 163 |
| Amorphous thickness | | [nm] | 11.5 | 12.0 | 12.1 | 11.6 | 12.9 | 12.5 |
| Haze (per one sheet) | | [%] | 8.1 | 14.8 | 9.2 | 8.6 | 6.7 | 4.7 |
| Tensile modulus | $T_1$ (MD direction) | [MPa] | 1235 | 1314 | 1048 | 1141 | 1539 | 1757 |
| | $T_2$ (TD direction) | [MPa] | 927 | 1041 | 1115 | 948 | 1473 | 1201 |
| | $T_1 + T_2$ | [MPa] | 2161 | 2354 | 2163 | 2089 | 3012 | 2958 |
| Thermal shrinkage rate in MD direction | 100°C for 15 minutes | [%] | 4.9 | 4.0 | 2.9 | 3.9 | 3.1 | 3.9 |
| | 120°C for 15 minutes | [%] | 19.0 | 17.7 | 21.8 | 20.5 | 38.8 | 25.2 |

(continued)

| | | Example 1 | Example 2 | Example 3 | Example 4 | Comparative Example 1 | Comparative Example 2 |
|---|---|---|---|---|---|---|---|
| Static friction coefficient (non-corona-treated surface side surface) | [tan θ] | 0.47 | 0.30 | 0.45 | 0.36 | 0.48 | 0.40 |
| Heat fusion strength | [N/15 mm] | 1.3 | 0.7 | 2.0 | 3.7 | 4.5 | 1.5 |
| Lamination strength | [N/15 mm] | 1.1 | 1.2 | 0.9 | 0.8 | 0.8 | 0.7 |
| Puncture strength | [N] | 4.8 | 6.7 | 4.6 | 4.5 | 3.5 | 2.4 |
| Bending resistance (-30°C, number of generated pinholes) | [pinholes/ $m^2$] | 1032 | 1985 | 1985 | 1985 | 2858 | 2707 |
| Tear strength (MD direction) | [m/N] | 487 | 235 | 255 | 270 | 89 | 69 |
| Evaluation of flexibility | | A | A | A | A | B | B |

In a case of using the stretched polyethylene films of Examples, a food packaging film with improved flexibility (performance balance of puncture strength, bending resistance, and tear strength) could be obtained.

This application claims priority based on Japanese Patent Application No. 2022-157678, Japanese Patent Application No. 2022-157993, and Japanese Patent Application No. 2022-157996 filed on September 30, 2022, the entire contents of which are incorporated herein by reference.

The present invention can also adopt the following aspects.

[1a] A stretched polyethylene film including, in order:

a high density polyethylene layer 1;
a medium density polyethylene layer; and
a high density polyethylene layer 2,
in which a density of the medium density polyethylene layer, which is measured in accordance with JIS K 7112: 1999, is equal to or more than 910 kg/m$^3$ and equal to or less than 935 kg/m$^3$.

[2a] The stretched polyethylene film according to [1a],
in which when an entirety of the stretched polyethylene film is 100% by mass, a total amount of the high density polyethylene layer 1 and the high density polyethylene layer 2 in the stretched polyethylene film is equal to or more than 25% by mass and equal to or less than 85% by mass.

[3a] The stretched polyethylene film according to [1a] or [2a],
in which a density of each of the high density polyethylene layer 1 and the high density polyethylene layer 2, which is measured in accordance with JIS K 7112: 1999, is equal to or more than 940 kg/m$^3$ and equal to or less than 970 kg/m$^3$.

[4a] The stretched polyethylene film according to any one of [1a] to [3a],
in which an MFR of each of the high density polyethylene layer 1 and the high density polyethylene layer 2, which is measured under conditions of 190°C and a load of 2.16 kg in accordance with ASTM D1238, is equal to or more than 0.01 g/10 min and equal to or less than 20 g/10 min.

[5a] The stretched polyethylene film according to any one of [1a] to [4a],
in which an MFR of the medium density polyethylene layer, which is measured under conditions of 190°C and a load of 2.16 kg in accordance with ASTM D1238, is equal to or more than 0.01 g/10 min and equal to or less than 20 g/10 min.

[6a] The stretched polyethylene film according to any one of [1a] to [5a],
in which in the stretched polyethylene film, a full width at half maximum (FWHM) of a peak in a diffraction angle 2θ range of 0.2° to 0.4° in an MD direction, which is obtained from small angle X-ray scattering (SAXS) measurement, is equal to or less than 0.20°.

[7a] The stretched polyethylene film according to any one of [1a] to [6a],

in which when a first differential scanning calorimetry (1st Run) including a process of raising temperature from -50°C to 200°C at a temperature rising rate of 10°C/min, an isothermal process of holding the temperature at 200°C for 10 minutes, and a process of lowering the temperature from 200°C to -50°C at a temperature falling rate of 10°C/min, and a second differential scanning calorimetry (2nd Run) including a process of raising the temperature from -50°C to 200°C at a temperature rising rate of 10°C/min are continuously performed on the stretched polyethylene film using a differential scanning calorimeter,
in a DSC curve 1 obtained by the first differential scanning calorimetry, an endothermic peak A is observed in a range of equal to or higher than 10°C and equal to or lower than 160°C, and an amount of heat of fusion ($\Delta H_m$) of the endothermic peak A is equal to or more than 110 J/g and equal to or less than 162 J/g.

[8a] The stretched polyethylene film according to any one of [1a] to [7a],
in which in the stretched polyethylene film, a Haze per one stretched polyethylene film, which is measured in accordance with JIS K 7136: 2000, is equal to or less than 16.0%.

[9a] The stretched polyethylene film according to any one of [1a] to [8a],
in which a total value of a tensile modulus $T_1$ in an MD direction and a tensile modulus $T_2$ in a TD direction of the stretched polyethylene film, which is measured using a tensile tester under conditions of a measurement temperature of 23 ± 2°C, a relative humidity of 50 ± 5% RH, and a tensile speed of 5 mm/min in accordance with JIS K7127: 1999, is equal to or more than 1600 MPa and equal to or less than 2900 MPa.

[10a] The stretched polyethylene film according to any one of [1a] to [9a],
in which a thermal shrinkage rate of the stretched polyethylene film in an MD direction when subjected to a heat treatment at 100°C for 15 minutes in accordance with JIS C2151: 2019 is equal to or less than 5.5%.

[11a] The stretched polyethylene film according to any one of [1a] to [10a],

in which a thermal shrinkage rate of the stretched polyethylene film in an MD direction when subjected to a heat treatment at 120°C for 15 minutes in accordance with JIS C2151: 2019 is equal to or less than 25.0%.

[12a] The stretched polyethylene film according to any one of [1a] to [11a], in which at least one surface of the stretched polyethylene film is a corona-treated surface.

[13a] The stretched polyethylene film according to any one of [1a] to [12a],

in which at least one surface of the stretched polyethylene film is a non-corona-treated surface, and a heat fusion strength when the non-corona-treated surface sides of the stretched polyethylene film are heat-sealed at 140°C to be laminated is equal to or less than 4.0 N/15 mm.

[14a] The stretched polyethylene film according to any one of [1a] to [13a], in which a lamination strength of the stretched polyethylene film in an MD direction, which is measured using a tensile tester under conditions of T-type peeling and a crosshead speed of 300 mm/min in accordance with JIS Z 0238: 1998, is equal to or more than 0.7 N/15 mm and equal to or less than 10.0 N/15 mm.

[15a] The stretched polyethylene film according to any one of [1a] to [14a], in which a thickness of an entire stretched polyethylene film is equal to or more than 10 $\mu$m and equal to or less than 100 $\mu$m.

[16a] The stretched polyethylene film according to any one of [1a] to [15a], in which the stretched polyethylene film is a food packaging film.

[17a] A packaging material using the stretched polyethylene film according to any one of [1a] to [16a].

[18a] A food packaged body including:

the packaging material according to [17a]; and food inside the packaging material.

The present invention can also adopt the following aspects.
[1b] A stretched polyethylene film including, in order:

a high density polyethylene layer 1;
a medium density polyethylene layer; and
a high density polyethylene layer 2,
in which an amorphous thickness obtained from a peak in a diffraction angle 2$\theta$ range of 0.2° to 0.4° in an MD direction by small angle X-ray scattering (SAXS) measurement is less than 12.5 nm.

[2b] The stretched polyethylene film according to any one of [1b], in which a tensile modulus $T_2$ of the stretched polyethylene film in a TD direction, which is measured using a tensile tester under conditions of a measurement temperature of 23 $\pm$ 2°C, a relative humidity of 50 $\pm$ 5% RH, and a tensile speed of 5 mm/min in accordance with JIS K7127: 1999, is equal to or more than 920 MPa.

[3b] The stretched polyethylene film according to [1b] or [2b], in which a density of the medium density polyethylene layer, which is measured in accordance with JIS K 7112: 1999, is equal to or more than 910 kg/m$^3$ and equal to or less than 940 kg/m$^3$.

[4b] The stretched polyethylene film according to any one of [1b] to [3b], in which when an entirety of the stretched polyethylene film is 100% by mass, a total amount of the high density polyethylene layer 1 and the high density polyethylene layer 2 in the stretched polyethylene film is equal to or more than 25% by mass and equal to or less than 85% by mass.

[5b] The stretched polyethylene film according to any one of [1b] to [4b], in which a density of each of the high density polyethylene layer 1 and the high density polyethylene layer 2, which is measured in accordance with JIS K 7112: 1999, is equal to or more than 940 kg/m$^3$ and equal to or less than 970 kg/m$^3$.

[6b] The stretched polyethylene film according to any one of [1b] to [5b], in which in the stretched polyethylene film, a Haze per one stretched polyethylene film, which is measured in accordance with JIS K 7136: 2000, is equal to or less than 16.0%.

[7b] The stretched polyethylene film according to any one of [1b] to [6b], in which a total value of a tensile modulus $T_1$ in the MD direction and a tensile modulus $T_2$ in a TD direction of the stretched polyethylene film, which is measured using a tensile tester under conditions of a measurement temperature of 23 $\pm$ 2°C, a relative humidity of 50 $\pm$ 5% RH, and a tensile speed of 5 mm/min in accordance with JIS K7127: 1999, is equal to or more than 1500 MPa and equal to or less than 2900 MPa.

[8b] The stretched polyethylene film according to any one of [1b] to [7b],
in which a thermal shrinkage rate of the stretched polyethylene film in the MD direction when subjected to a heat treatment at 100°C for 15 minutes in accordance with JIS C2151: 2019 is equal to or less than 6.0%.
[9b] The stretched polyethylene film according to any one of [1b] to [8b],
in which at least one surface of the stretched polyethylene film is a corona-treated surface.
[10b] The stretched polyethylene film according to any one of [1b] to [9b],

> in which at least one surface of the stretched polyethylene film is a non-corona-treated surface, and
> a heat fusion strength when non-corona-treated surface sides of the stretched polyethylene film are laminated and heat-sealed at 140°C is equal to or less than 4.0 N/15 mm.

[11b] The stretched polyethylene film according to any one of [1b] to [10b],
in which a thickness of an entire stretched polyethylene film is equal to or more than 10 $\mu$m and equal to or less than 100 $\mu$m.
[12b] The stretched polyethylene film according to any one of [1b] to [11b],
in which the stretched polyethylene film is a food packaging film.
[13b] A packaging material using the stretched polyethylene film according to any one of [1b] to [12b].
[14b] A food packaged body including:

> the packaging material according to [13b], and
> food inside the packaging material.

REFERENCE SIGNS LIST

100:    stretched polyethylene film
101:    high density polyethylene layer 1
102:    medium density polyethylene layer
103:    high density polyethylene layer 2

**Claims**

1.  A stretched polyethylene film comprising, in order:

> a high density polyethylene layer 1;
> a medium density polyethylene layer; and
> a high density polyethylene layer 2,
> wherein when a first differential scanning calorimetry (1st Run) including a process of raising temperature from -50°C to 200°C at a temperature rising rate of 10°C/min, an isothermal process of holding the temperature at 200°C for 10 minutes, and a process of lowering the temperature from 200°C to -50°C at a temperature falling rate of 10°C/min, and a second differential scanning calorimetry (2nd Run) including a process of raising the temperature from -50°C to 200°C at a temperature rising rate of 10°C/min are continuously performed using a differential scanning calorimeter,
> in a DSC curve 1 obtained by the first differential scanning calorimetry, an endothermic peak A is observed in a range of equal to or higher than 10°C and equal to or lower than 160°C, and an amount of heat of fusion ($\Delta H_m$) of the endothermic peak A is equal to or more than 110 J/g and equal to or less than 162 J/g.

2.  The stretched polyethylene film according to Claim 1,
wherein a density of the medium density polyethylene layer, which is measured in accordance with JIS K 7112: 1999, is equal to or more than 910 kg/m$^3$ and equal to or less than 935 kg/m$^3$.

3.  The stretched polyethylene film according to Claim 1 or 2,
wherein an amorphous thickness obtained from a peak in a diffraction angle 2θ range of 0.2° to 0.4° in an MD direction by small angle X-ray scattering (SAXS) measurement is less than 12.5 nm.

4.  The stretched polyethylene film according to any one of Claims 1 to 3,
wherein when an entirety of the stretched polyethylene film is 100% by mass, a total amount of the high density polyethylene layer 1 and the high density polyethylene layer 2 in the stretched polyethylene film is equal to or more than 25% by mass and equal to or less than 85% by mass.

5. The stretched polyethylene film according to any one of Claims 1 to 4,
wherein a density of each of the high density polyethylene layer 1 and the high density polyethylene layer 2, which is measured in accordance with JIS K 7112: 1999, is equal to or more than 940 kg/m$^3$ and equal to or less than 970 kg/m$^3$.

6. The stretched polyethylene film according to any one of Claims 1 to 5,
wherein an MFR of each of the high density polyethylene layer 1 and the high density polyethylene layer 2, which is measured under conditions of 190°C and a load of 2.16 kg in accordance with ASTM D1238, is equal to or more than 0.01 g/10 min and equal to or less than 20 g/10 min.

7. The stretched polyethylene film according to any one of Claims 1 to 6,
wherein an MFR of the medium density polyethylene layer, which is measured under conditions of 190°C and a load of 2.16 kg in accordance with ASTM D1238, is equal to or more than 0.01 g/10 min and equal to or less than 20 g/10 min.

8. The stretched polyethylene film according to any one of Claims 1 to 7,
wherein in the stretched polyethylene film, a full width at half maximum (FWHM) of a peak in a diffraction angle $2\theta$ range of 0.2° to 0.4° in an MD direction, which is obtained from small angle X-ray scattering (SAXS) measurement, is equal to or less than 0.21°.

9. The stretched polyethylene film according to any one of Claims 1 to 8,
wherein in the stretched polyethylene film, a Haze per one stretched polyethylene film, which is measured in accordance with JIS K 7136: 2000, is equal to or less than 16.0%.

10. The stretched polyethylene film according to any one of Claims 1 to 9,
wherein a tensile modulus $T_2$ of the stretched polyethylene film in a TD direction, which is measured using a tensile tester under conditions of a measurement temperature of $23 \pm 2$°C, a relative humidity of $50 \pm 5$% RH, and a tensile speed of 5 mm/min in accordance with JIS K7127: 1999, is equal to or more than 700 MPa.

11. The stretched polyethylene film according to any one of Claims 1 to 10,
wherein a total value of a tensile modulus $T_1$ in an MD direction and a tensile modulus $T_2$ in a TD direction of the stretched polyethylene film, which is measured using a tensile tester under conditions of a measurement temperature of $23 \pm 2$°C, a relative humidity of $50 \pm 5$% RH, and a tensile speed of 5 mm/min in accordance with JIS K7127: 1999, is equal to or more than 1500 MPa and equal to or less than 2900 MPa.

12. The stretched polyethylene film according to any one of Claims 1 to 11,
wherein a thermal shrinkage rate of the stretched polyethylene film in an MD direction when subjected to a heat treatment at 100°C for 15 minutes in accordance with JIS C2151: 2019 is equal to or less than 6.0%.

13. The stretched polyethylene film according to any one of Claims 1 to 12,
wherein a thermal shrinkage rate of the stretched polyethylene film in an MD direction when subjected to a heat treatment at 120°C for 15 minutes in accordance with JIS C2151: 2019 is equal to or less than 25.0%.

14. The stretched polyethylene film according to any one of Claims 1 to 13,
wherein at least one surface of the stretched polyethylene film is a corona-treated surface.

15. The stretched polyethylene film according to any one of Claims 1 to 14,
wherein a lamination strength of the stretched polyethylene film in an MD direction, which is measured using a tensile tester under conditions of T-type peeling and a crosshead speed of 300 mm/min in accordance with JIS Z 0238: 1998, is equal to or more than 0.7 N/15 mm and equal to or less than 10.0 N/15 mm.

16. The stretched polyethylene film according to any one of Claims 1 to 15,
wherein the number of pinholes generated in the stretched polyethylene film, which is measured by a bending test of 3000 times at a bending angle of 440 degrees and a bending speed of 40 times/min in an atmosphere of -30°C using a Gelbo Flex Tester, is equal to or less than 2500 pinholes/m$^2$.

17. The stretched polyethylene film according to any one of Claims 1 to 16,

wherein a tear strength of the stretched polyethylene film in an MD direction, which is measured using a light load tearing tester under conditions of a test piece having a size of 63.5 mm in the MD direction and 50.0 mm in a TD direction, a pendulum weight of 96.09 g, a tear length of 12.7 mm, and a pendulum lifting angle of 90°, is equal to or more than 100 mN and equal to or less than 600 mN.

18. The stretched polyethylene film according to any one of Claims 1 to 17,
    wherein a thickness of an entire stretched polyethylene film is equal to or more than 10 $\mu$m and equal to or less than 100 $\mu$m.

19. The stretched polyethylene film according to any one of Claims 1 to 18,
    wherein the stretched polyethylene film is a packaging film for food.

20. A packaging material using the stretched polyethylene film according to any one of Claims 1 to 19.

21. A food packaged body comprising:

    the packaging material according to Claim 20; and
    food inside the packaging material.

[Fig.1]

100

101

102

103

## INTERNATIONAL SEARCH REPORT

| International application No. |
|---|
| **PCT/JP2023/034851** |

| **A. CLASSIFICATION OF SUBJECT MATTER** |
|---|
| ***B32B 27/32***(2006.01)i; ***B65D 65/40***(2006.01)i<br>FI: B32B27/32 E; B65D65/40 D |
| According to International Patent Classification (IPC) or to both national classification and IPC |

| **B. FIELDS SEARCHED** |
|---|
| Minimum documentation searched (classification system followed by classification symbols)<br>B32B1/00-43/00; B65D65/40 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used) |

| **C.** | **DOCUMENTS CONSIDERED TO BE RELEVANT** | |
|---|---|---|
| Category* | Citation of document, with indication, where appropriate, of the relevant passages | Relevant to claim No. |
| X | WO 2020/067426 A1 (DAI NIPPON PRINTING CO., LTD.) 02 April 2020 (2020-04-02)<br>    claims 1-13, paragraphs [0007], [0030]-[0040], [0050]-[0053], [0176]-[0180], examples 1-<br>    2, 2-2, 3-2, 4-2, 5-2, 6-2, 7-2, 8-2, 9-2, 10-2, 11-2, 12-2 | 1-21 |
| X | US 2020/0324513 A1 (BEMIS COMPANY, INC.) 15 October 2020 (2020-10-15)<br>    claims 1-20, paragraphs [0036], [0039]-[0042], [0044], [0047], [0048], [0050], [0051],<br>    examples 4, 6 | 1-21 |
| A | JP 2022-73059 A (DAI NIPPON PRINTING CO., LTD.) 17 May 2022 (2022-05-17)<br>    claims 1-14, example 1 | 1-21 |
| A | WO 2022/092296 A1 (DAI NIPPON PRINTING CO., LTD.) 05 May 2022 (2022-05-05)<br>    claims 1-19, examples 1A-7D | 1-21 |
| A | WO 2022/168867 A1 (DAI NIPPON PRINTING CO., LTD.) 11 August 2022 (2022-08-11)<br>    claims 1-14, examples 1A, 2A | 1-21 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 December 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034851**

| Patent document cited in search report | | | Publication date (day/month/year) | Patent family member(s) | | | Publication date (day/month/year) |
|---|---|---|---|---|---|---|---|
| WO | 2020/067426 | A1 | 02 April 2020 | JP | 2020-55156 | A | |
| | | | | JP | 2020-55158 | A | |
| | | | | JP | 2020-55159 | A | |
| | | | | JP | 2020-55162 | A | |
| | | | | JP | 2020-55163 | A | |
| | | | | JP | 2020-55175 | A | |
| | | | | JP | 2020-55177 | A | |
| US | 2020/0324513 | A1 | 15 October 2020 | WO | 2019/132954 | A1 | |
| | | | | EP | 3732042 | A1 | |
| JP | 2022-73059 | A | 17 May 2022 | (Family: none) | | | |
| WO | 2022/092296 | A1 | 05 May 2022 | JP | 2022-73027 | A | |
| | | | | JP | 2022-165191 | A | |
| | | | | JP | 2022-73902 | A | |
| | | | | JP | 2023-24142 | A | |
| | | | | JP | 2023-56928 | A | |
| | | | | JP | 2023-56930 | A | |
| WO | 2022/168867 | A1 | 11 August 2022 | JP | 2022-119211 | A | |
| | | | | JP | 2023-47260 | A | |
| | | | | JP | 2023-47262 | A | |
| | | | | JP | 2023-47261 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022053864 A
- JP 2022079510 A
- JP 2018008455 A
- JP 2009241359 A

- JP 2022157678 A
- JP 2022157993 A
- JP 2022157996 A

**Non-patent literature cited in the description**

- *Nichias technical information*, 2014, vol. 2, 365